# EUROPEAN PATENT SPECIFICATION

(11) **EP 2 853 474 B1**
(45) Date of publication and mention of the grant of the patent: **07.09.2016**
(21) Application number: 14179066.7
(22) Date of filing: 30.07.2014
(51) Int. Cl.: B62J 35/00

(54) **Fuel pump attachment structure**
Befestigungsstruktur für eine Kraftstoffpumpe
Structure de fixation de pompe à carburant

(30) Priority: 30.09.2013 JP 2013205211
(43) Date of publication of application: 01.04.2015
(73) Proprietor: Honda Motor Co., Ltd., Tokyo 107-8556 (JP)
(72) Inventor: Inoue, Yusuke, Wako-shi, Saitama 351-0193 (JP); Hirano, Kohei, Wako-shi, Saitama 351-0193 (JP)
(74) Representative: Stevens, Jason Paul

(56) References cited:
- JP-A- 2007 182 892
- JP-A- 2008 201 171
- JP-A- 2011 214 434

## Description

The present invention relates to a fuel pump attachment structure and, more particularly, to a fuel pump attachment structure having an improved member adapted to support a fuel pump in a fuel tank.

Japanese Patent No. 5235089 shows a fuel tank which incorporates a fuel pump. The fuel pump is attached via a ring-shaped pump support member adapted to be attached to the fuel tank.

The fuel pump attachment structure described in Japanese Patent No. 5235089 uses a metallic plate member that has been punched into a ring shape by using outer and inner moulds. This metallic member is used to form a ring-shaped pump support member. With such a formation method, the material inside the punched ring shape is discarded without being used, thus resulting in a significant waste of material. This has led to mounting pump support member costs. In particular, if an expensive plate material such as titanium is used, it is desirable to improve material usage efficiency and reduce waste.

An alternative form of fuel pump attachment structue is disclosed in JP 2011-214434, on which the preamble of claim 1 is based. Here, the fuel pump is attached to an upper part of the fuel tank.

The present invention has been made in light of the foregoing, and it is an object of at least the preferred embodiments of the present invention to provide a fuel pump attachment structure that can improve material usage efficiency for the pump support member and reduce cost, even if an expensive material is used.

According to a first aspect of the present invention, there is provided a fuel pump attachment structure for supporting a fuel pump with a pump support member provided on a tank outer wall of a fuel tank, the fuel pump being inserted into the fuel tank through a pump attachment opening formed in the fuel tank, wherein the pump support member is formed from a plurality of plate-shaped support plate sections arranged around the pump attachment opening, and the fuel pump is secured to fastening sections provided on the support plate sections, and is attached to the pump attachment opening in a liquid tight manner, characterized in that the pump support member is formed from at least three plate-shaped support plate sections arranged around the pump attachment opening, the pump attachment opening is formed in a bottom face of the fuel tank, which is depressed toward the inside of the fuel tank more than the rest of the bottom of the fuel tank.

As the pump support member is formed as a plurality of (specifically, at least three) plate-shaped support plate sections arranged around the pump attachment opening, the pump support member is smaller than a ring-shaped member surrounding the pump attachment opening. Further, as the pump support member is formed from a plurality of members rather than a single ring-shaped member, it is possible to arrange the support plate sections close to each other for cutting in such a manner as to minimize waste. This is not the case with the pump support for example, cut into a ring shape, in which case the material inside the ring shape is discarded wastefully. As a result, it is possible to minimize waste of raw material from which the pump support member is machined, thus contributing to reduced cost.

Preferably, the pump attachment opening is formed in a circular shape, and the support plate sections are formed in the shape of an arc and have approximately the same length as seen in plan view.

With this arrangement, it is easy to arrange the support plate sections around the pump attachment opening because the pump attachment opening is formed in a circular shape and the support plate sections are formed in the shape of an arc. Moreover, the support plate sections are formed to have approximately the same length as seen in plan view. This makes it possible to arrange target areas side by side and close to each other for cutting during formation of the support plate sections from a plate-shaped raw material, thus allowing the support plate sections to be formed with minimal waste and high yield.

In a further preferred form, three support plate sections are arranged in such a manner as to surround the pump attachment opening, and a fastening section is provided at each of the two longitudinal ends of each of the support plate sections.

Since three support plate sections are arranged so as to surround the pump attachment opening, the arc shapes of the support plate sections become closer to straight lines. As a result, the plate material of the support plate sections can be cut at smaller intervals during cutting of the support plate sections from a raw material, thus ensuring higher efficiency in material cutting. Further, using three support plate sections makes these sections lengthy, and as the fastening sections are provided at the two longitudinal ends of each of the support plate sections, this provides a wider interval between the fastening sections, thus contributing to improved supporting efficiency of the pump support area by making the most of the lengths of the support plate sections.

In a further preferred form, the support plate sections are arranged in a horizontally symmetrical manner with respect to a vehicle body centreline.

This arrangement provides excellent horizontal weight balance.

Preferably, each of the support plate sections includes: welded portions each of which is welded to the tank outer wall, and spaced portions each of which is spaced by a given distance from the tank outer wall, and the fastening section includes: bolt male thread sections of bolts each of which projects toward the outside of the tank from a through-hole formed in one of the spaced portions, and support outer faces of the spaced portions on the inside of which bolt heads of the bolts are arranged.

With this arrangement, each of the fastening sections includes the bolt male thread section and a support outer face of the spaced portion. This allows the fastening section to be formed with ease by arranging the bolt head on the rear side of the spaced portion and welding the support plate section to the tank outer wall.

In a further preferred form, each of the support plate sections has bent side walls each of which is bent to form the spaced portion, and each of the bent side walls engages with the bolt head to restrict rotation of the bolt.

This arrangement makes it possible to restrict rotation of the bolts simply by providing the bolts in such a manner that each of the bolt heads is arranged on the rear side of the spaced portion.

Preferably, tank side marks are formed on the tank outer wall to identify the position where one of the support plate sections is to be secured during machining of the tank, a support plate side mark is formed on each of the support plate sections to identify the position where one of the support plate sections is to be secured, and the position where each of the support plate sections is to be secured is determined based on the positional relationship between the tank side mark and the support plate side mark.

This makes it possible to determine the position where each of the support plate sections is to be secured, for example, by aligning the tank side mark with the support plate side mark. As a result, the support plate sections can be secured with ease and accuracy, thus eliminating the need for tasks such as measurement for positioning and reducing assembly man-hours.

Preferably, the fuel tank and the pump support member are made of a titanium alloy.

This makes it possible to weld the support plate sections and minimize waste of an expensive material, thus contributing to reduced cost.

Preferred embodiments of the invention will now be described by way of example only, and with reference to the accompanying drawings, in which:
FIG. 1 is a right side view showing a motorcycle to which a first embodiment of a fuel pump attachment structure according to the present invention is applied;
FIG. 2 is an enlarged side view, with part of the fuel tank broken away;
FIG. 3 is an exploded perspective view of major components showing the fuel pump attachment structure;
FIG. 4 is a cross-sectional view of major components of the fuel pump attachment structure;
FIG. 5 is a bottom view of the fuel tank before the fuel pump is attached;
FIG. 6 shows schematic plan views for describing the machining process of support plate sections in the fuel pump attachment structure according to the present invention;
FIG. 7 is a bottom view of the fuel tank before the fuel pump is attached showing a modification example of the first embodiment of the fuel pump attachment structure;
FIG. 8 is a cross-sectional view of major components in a second embodiment of the fuel pump attachment structure according to the present invention; and
FIG. 9 is a perspective view of major components of a pump support member shown in FIG. 8.

A detailed description will be given below of embodiments of the fuel pump attachment structure according to the present invention with reference to the accompanying drawings. It should be noted that the drawings should be viewed so that the reference symbols are in their correct orientation, In the following description, terms such as "front", "rear", "left", "right", "top" and "bottom" should be interpreted from the viewpoint of a rider of the motorcycle. In the drawings, front, rear, left, right, top, and bottom of the vehicle are denoted respectively by "Fr," "Rr," "L," "R," "U," and "D."

### (First Embodiment)

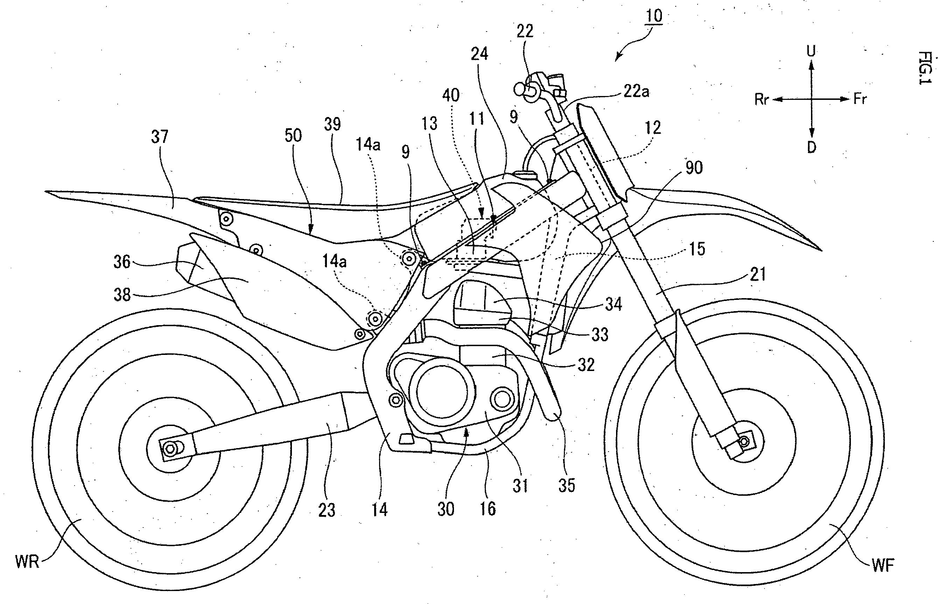

A description will now be given first of a first embodiment of the fuel pump attachment structure according to the present invention with reference to FIGS. 1 to 7.

A motorcycle 10 has a vehicle body frame 11 that includes a head pipe 12, a pair of left and right main frames 13, a pair of left and right pivot frames 14, a down frame 15, and a pair of left and right bottom frames 16. The head pipe 12 is provided at a front end of the motorcycle 10. The pair of left and right main frames 13 branch out to the left and right from the head pipe 12 and extend rearwardly and downwardly. The pair of left and right pivot frames 14 are connected respectively to the rear ends of the pair of left and right main frames 13 and extend downwardly. The down frame 15 extends downwardly from the head pipe 12. The pair of left and right bottom frames 16 connect a lower end of the down frame 15 and the lower ends of the pair of left and right pivot frames 14. An engine 30 is attached to the pivot frames 14 and the bottom frames 16.

Further, the motorcycle 10 includes a front fork 21, a front wheel WF, a steering handlebar 22, a swing arm 23, a rear wheel WR, a rear wheel suspension (not shown), and a fuel tank 24. The front fork 21 is supported by the head pipe 12 in a freely steerable manner. The front wheel WF is rotatably supported at a lower end of the front fork 21. The steering handlebar 22 is attached to a steering rod 22a at an upper end of the front fork 21. The swing arm 23 is supported by the pivot frames 14 in a freely swingable manner. The rear wheel WF is rotatably supported at a rear end of the swing arm 23. The rear wheel suspension suspends the swing arm 23. The fuel tank 24 is attached to the main frames 13.

Further, a rear frame 50 is bolted to the pair of left and right pivot frames 14. A rear fender 37, a muffler cover 38, and a seat 39 are secured to the rear frame 50.

The outer shell of the engine 30 primarily includes a crankcase 31, a cylinder block 32, a cylinder head 33, and a cylinder head cover 34 as shown in FIG. 1. The cylinder block 32 is attached to a front upper end of the crankcase 31. The cylinder head 33 is attached to an upper end of the cylinder block 32. The cylinder head cover 34 covers an upper opening of the cylinder head 33.

A throttle body and an air cleaner case (not shown) are connected to the cylinder head 33. Further, an exhaust pipe 35 and a muffler 36 are connected to the cylinder head 33. The muffler 36 is attached to a downstream end of the exhaust pipe 35 to reduce exhaust sound.

Further, two pairs of left and right attachment brackets 14a are formed, one at an upper end of the pair of left and right pivot frames 14 and another on an intermediate rear face thereof, as shown in FIG. 1. The rear frame 50 is fastened to an outer face of these four attachment brackets 14a, one each at top left, top right, bottom left, and bottom right. Still further, the rear fender 37 and the muffler cover 38 are attached to a rear end of the rear frame 50 as appropriate. Still further, a cover member 90 is provided to cover part of the side area of a radiator 17 and the front side area of the fuel tank 24.

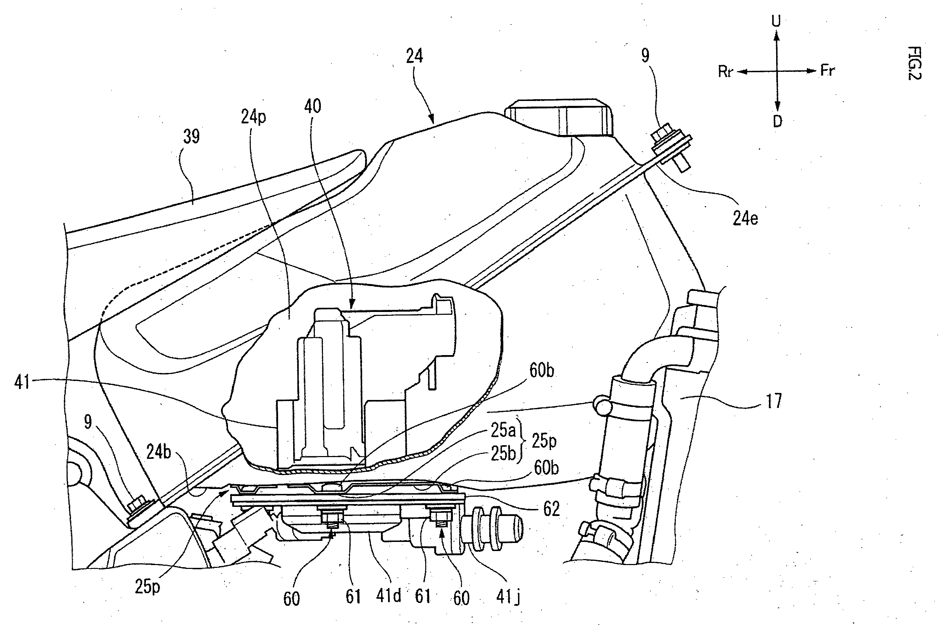

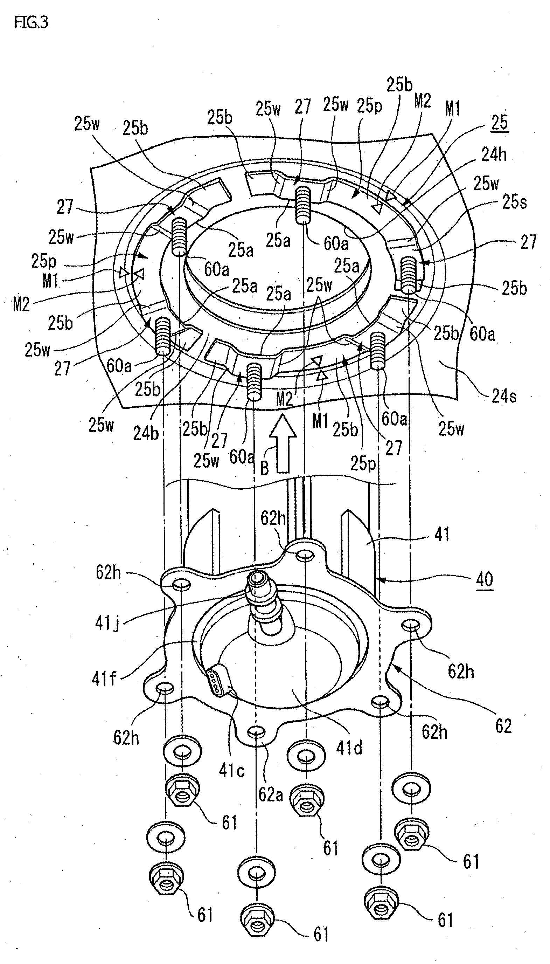

A fuel pump 40 is provided in the fuel tank 24 to supply fuel from the tank to the throttle body as shown in FIGS. 1 and 2. The fuel pump 40 is installed in such a manner as to be inserted into the fuel tank 24 through a pump attachment opening 24h (see FIG. 3) formed in a bottom face 24b of the fuel tank 24. The fuel pump 40 is provided in such a manner that a pump main body 41 is upright in a tank inner space 24p and a pump bottom section 41 d projects downward below the fuel tank 24.

A more detailed description will be given below of the fuel pump attachment structure and the manner in which the pump is attached with reference to FIGS. 2 and 3.

The pump main body 41 of the fuel pump 40 is inserted into the tank inner space 24p through the pump attachment opening 24h and secured as shown in FIG. 3. At this time, the fuel pump 40 is held by a pump support member 25 provided near the pump attachment opening 24h which will be described in detail later.

Here, the pump support member 25 provided near the pump attachment opening 24h is formed with a plurality of (in this case, three) plate-shaped support plate sections 25p provided on a tank outer wall 24s. The plate-shaped support plate sections 25p are bent as appropriate as will be described later. Further, the pump attachment opening 24h is formed in a circular shape, and the three support plate sections 25p are provided equidistantly in such a manner as to surround the pump attachment opening 24h. Still further, the three support plate sections 25p are formed in the shape of an arc, and have approximately the same length as seen in plan view.

It should be noted that the bottom face 24b of the fuel tank 24 in which the pump attachment opening 24h is formed is depressed toward the inside of the tank, more than the rest of the bottom of the fuel tank 24, to form an annular flat surface. This not only forms a flat tank outer face for easy installation of the pump support member 25, but also reduces the extent to which bolt male thread sections 60a of fastening sections 27 project downwardly.

Further, the fastening sections 27 are provided at two positions of each of the support plate sections 25p. The bolt male thread section 60a projects downwardly from each of the fastening sections 27. A fastening section 27 is located near each of the two longitudinal ends of each of the support plate sections 25p, thus providing a wide interval between the fastening sections 27.

Further, the support plate sections 25p are bent in the direction of the plate thickness, such that each of the support plate sections 25p includes three welded portions 25b and two spaced portions 25a. Each of the welded portions 25b is welded to the tank outer wall 24s. Each of the spaced portions 25a is spaced from the tank outer wall 24s because of a bent side wall 25w that rises by a given distance from the tank outer wall 24s.

A through-hole 26 is formed in each of the spaced portions 25a. The bolt male thread section 60a of a bolt 60 passes through each of the through-holes 26. Thus, each of the support plate sections 25p holds bolt heads 60b between the tank outer wall 24s and the spaced portions 25a. Each of the fastening sections 27 includes the bolt male thread section 60a and a support outer face 25s of the spaced portion 25a.

It should be noted that, in the present embodiment, each of the bolts 60 is secured in the through-hole 26, for example, by swaging the bolt head 60b. Thus, if the bolt 60 is secured to the support plate section 25p by swaging, the fastening section 27 can be formed by welding the welded portion 25b to the tank outer wall 24s.

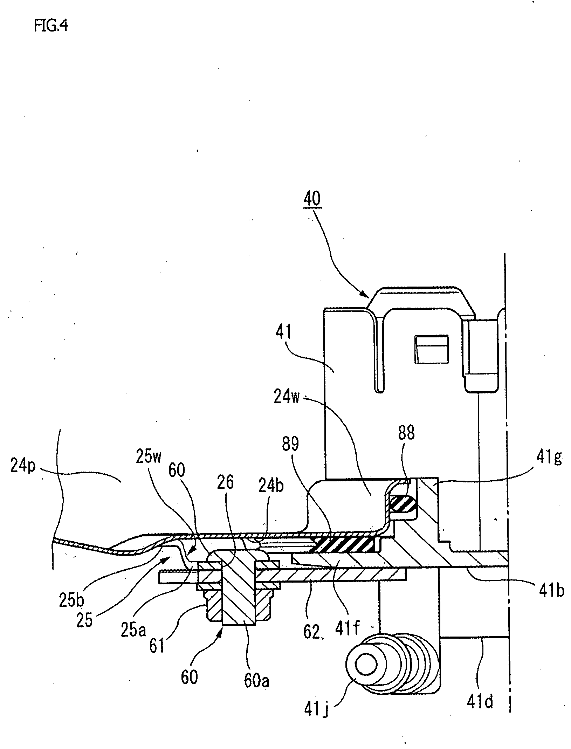

An attachment flange section 41f (see FIG. 4) is provided on the pump bottom section 41d of the fuel tank 40. The attachment flange section 41f faces the bottom face 24b of a peripheral edge of the pump attachment opening 24h. When the fuel pump 40 is attached, the pump main body 41 is inserted through the pump attachment opening 24h (in the direction indicated by arrow B in FIG. 3) as shown in FIG. 3. Then, a set ring 62 is attached from above the attachment flange section 41f. The set ring 62 is, for example, a ring-shaped plate having through-holes 62h for the six bolt male thread sections 60a. Nuts 61 are tightened so as to bring the set ring 62 into contact with the support outer faces 25s of the spaced portions 25a. This tightening secures and attaches the fuel pump 40 to the fuel tank 24.

It should be noted that a joint section 41j and a connector section 41 c are provided on the pump bottom section 41 d of the fuel pump 40. The joint section 41j is connected to a fuel pipe (not shown). The connector section 41 c is used to supply drive power.

Further, a first gasket 88 is arranged between a main body outer perimeter section 41 g of the fuel pump 40 that has been secured and attached and an inner perimeter wall section 24w of the pump attachment opening 24h as shown in FIG. 4. The first gasket 88 is used for sealing in the radial direction of the pump attachment opening 24h. Still further, a second gasket 89 is arranged between the attachment flange section 41f and the bottom face 24b of the fuel tank 24. The second gasket 89 is used for sealing in the direction of the bottom face 24b. Thus, the fuel pump 40 is attached to the pump attachment opening 24h in a liquid tight manner using a double sealing structure.

Still further, the fuel tank 24 and the support plate sections 25p of the pump support member 25 according to the present embodiment are made of a titanium alloy. As the fuel tank 24 and the support plate sections 25p that are attached to the upper areas of the main frames 13 are made of a titanium alloy, this contributes to a lighter vehicle with a lower centre of gravity.

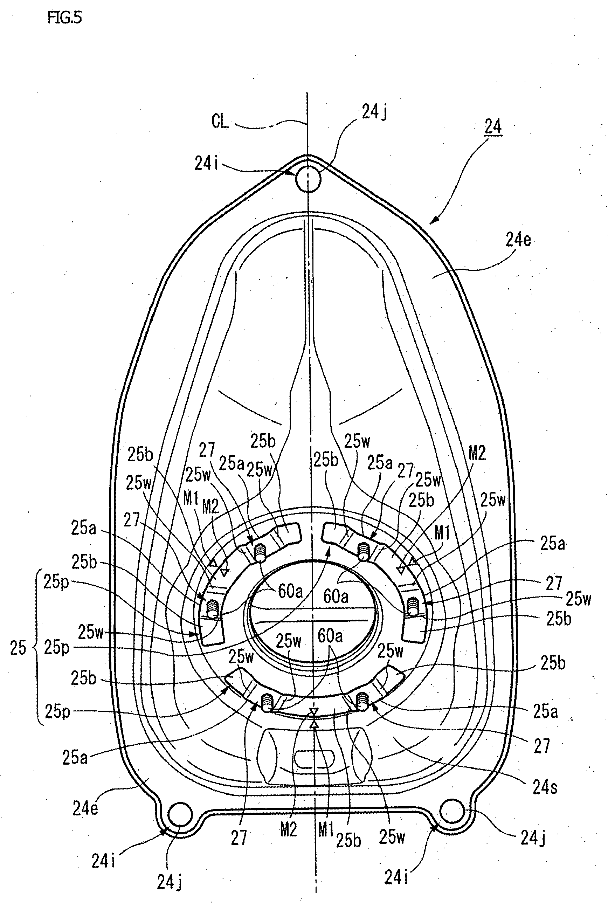

Still further, the fuel tank 24 is formed, for example, by welding upper and lower parts at a joint edge section 24e between outer perimeters thereof. The joint edge section 24e is formed at an approximately intermediate area in the vertical direction of the fuel tank 24 (see FIG: 2) and projects outwardly. The joint edge section 24e has three attachment holes as shown in FIG. 5, an attachment hole 24j provided in an attachment section 24i at the front end of the tank (the top in FIG. 5) and two attachment holes 24j each of which is provided in a left or right attachment section 24i at the rear area of the tank (the bottom in FIG. 5). The joint edge section 24e is secured as appropriate to the vehicle body frame 11 by means of tank attachment screws 9.

Still further, the two support plate sections 25p nearer to the vehicle front are arranged in a horizontally symmetrical manner with respect to a vehicle body centreline CL, and the one support plate section 25p on the rear of the vehicle is arranged in such a manner that the vehicle body centreline CL passes this support plate section 25p as shown in FIG. 5. Therefore, the support plate sections 25p are horizontally symmetric to provide weight balance.

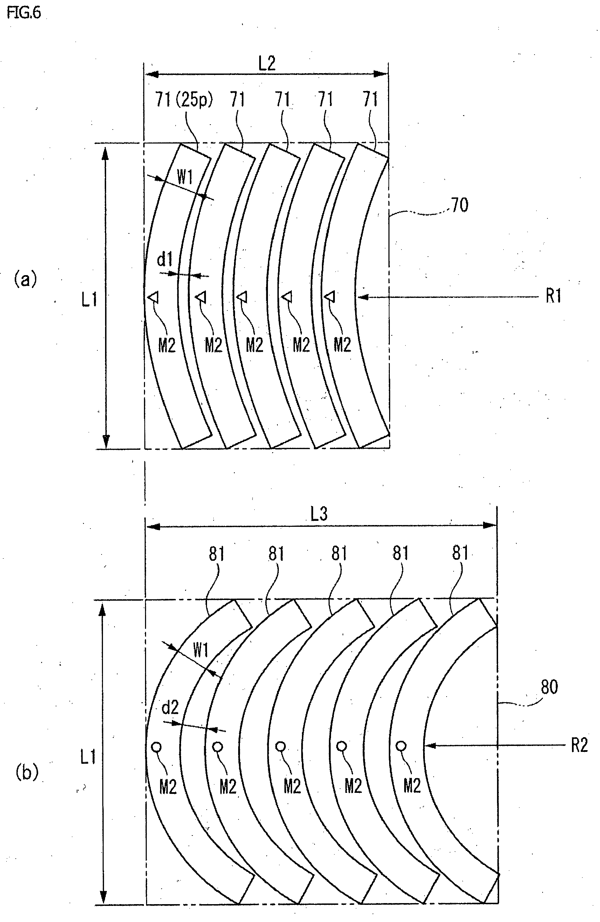

The arc-shaped support plate sections 25p according to the present embodiment can be manufactured, for example, by cutting from a plate-shaped raw material. That is, as shown in FIGS. 6(a) and 6(b), plate materials 71 and 81 of the support plate sections 25p having a given width W1 are cut respectively from given rectangular raw materials 70 and 80 (with length L1 and width L2 or L3). The plate materials 71 and 81 are cut respectively with small intervals d1 and d2 between adjacent plate materials. The cutting intervals d1 and d2 are significantly smaller than in the case where ring-shaped support plate sections are cut.

Further, setting a curvature R1 of the arcs of the support plate sections 25p shown in FIG. 6(a) larger than a curvature R2 of the arcs shown in FIG. 6(b) makes the cutting interval d1 smaller than the cutting interval d2.

Still further, in the present embodiment, three tank side marks M1, here in the shape of a triangle, are formed circumferentially equispaced on the tank outer wall 24s, as shown in FIGS. 3 and 5. Each of the tank side marks M1 identifies the position where one of the support plate sections 25p is to be secured, and is formed during machining of the tank, for example, during press working. Similarly, a support plate side mark M2, again here in the shape of a triangle, is formed at a longitudinally intermediate position of each of the support plate sections 25p as shown in FIG. 6(a). The support plate side mark M2 identifies the position where the support plate section 25p is to be secured.

This makes it possible to easily determine the position where one of the three support plate sections 25p is to welded, for example, by aligning the tank side mark M1 with the support plate side mark M2.

It should be noted that the support plate side marks M2 can be another shape, such as a circle as shown in FIG. 6(b).

As described above, in the fuel pump attachment structure of the present embodiment, the pump support member 25 is formed with the plurality of plate-shaped support plate sections 25p arranged around the pump attachment opening 24h, thus reducing the size of the pump support member 25 compared to when a ring-shaped member surrounding the pump attachment opening 24h is used. Further, the pump support member 25 is formed with a plurality of members rather than a single ring-shaped member that surrounds the pump attachment opening 24h. Therefore, it is possible to arrange the plate materials 71 and 81 (support plate sections 25p) close to each other for cutting in such a manner as to minimize waste as shown in FIG. 6. This is not the case with the pump support member 25 that is cut into a ring shape, where the material inside the ring shape is discarded wastefully. This reduces waste of the raw materials 70 and 80 from which the pump support member 25 is machined, thus contributing to reduced cost.

Further, in the fuel pump attachment structure of the present embodiment, the support plate sections 25p are formed in the shape of an arc in such a manner as to have approximately the same length as seen in plan view as shown in FIG. 6. As a result, because the support plate sections 25p are formed in the shape of an arc for the circular pump attachment opening 24h, it is easy to arrange the support plate sections 25p around the pump attachment opening 24h. Moreover, the support plate sections 25p are formed in such a manner as to have approximately the same length as seen in plan view. This makes it possible to arrange target areas side by side and close to each other for cutting during formation of the support plate sections 25p from the plate-shaped raw materials 70 and 80, thus allowing the support plate sections 25p to be formed with minimal waste and high yield.

Still further, in the fuel pump attachment structure of the present embodiment, the three support plate sections 25p are arranged in such a manner as to surround the pump attachment opening 24h. This makes the arc shapes of the support plate sections 25p closer to straight lines. As a result, the plate materials 71 and 81 of the support plate sections 25p can be cut at smaller intervals during cutting of the,support plate sections 25p from the raw materials 70 and 80 as shown in FIG. 6, thus ensuring higher efficiency in material cutting. Still further, using the three support plate sections 25p makes these sections lengthy. In addition, the fastening section 27 is provided at each of the two longitudinal ends of each of the support plate sections 25p. This provides a wider interval between the fastening sections 27, thus contributing to improved supporting efficiency of the pump support area by making the most of the lengths of the support plate sections 25p.

Still further, in the fuel pump attachment structure of the present embodiment, the support plate sections 25p are arranged in a generally horizontally symmetrical manner with respect to the vehicle body centreline CL, thus providing an excellent horizontal balance in vehicle weight.

Still further, in the fuel pump attachment structure of the present embodiment, each of the support plate sections 25p includes welded portions 25b and spaced portions 25a. Each of the welded portions 25b is welded to the tank outer wall 24s. Each of the spaced portions 25a is spaced by a given distance from the tank outer wall 24s. The bolt male thread sections 60a of the bolts 60 are inserted into the through-holes 26 of each of the spaced portions 25a. The bolt heads 60b are located on the rear side of each of the spaced portions 25a. As a result, each of the fastening sections 27 includes the bolt male thread section 60a and the support outer face 25s of the spaced portion 25a. This allows the fastening section 27 to be formed with ease by arranging the bolt head 60b on the rear side of the spaced portion 25a and welding the support plate section 25p to the tank outer wall 24s.

Still further, in the fuel pump attachment structure of the present embodiment, the tank side marks M1 are formed in the tank outer wall 24s. The tank side mark M1 identifies the position where one of the support plate sections 25p is to be secured during machining of the tank. The support plate side mark M2 is formed in each of the support plate sections 25p. The support plate side mark M2 identifies the position where one of the support plate sections 25p is to be secured. This makes it possible to determine the position where each of the support plate sections 25p is to be secured, for example, by aligning the tank side mark M1 with the support plate side mark M2. As a result, the support plate sections 25p can be secured with ease and accuracy, thus eliminating the need for tasks such as measurement for positioning and so reducing assembly man-hours.

Still further, in the fuel pump attachment structure of the present embodiment, the fuel tank 24 and the support plate sections 25p of the pump support member 25 are made of titanium alloy. This makes it possible to weld the support plate sections 25p and minimize waste of an expensive material such as titanium alloy, thus contributing to reduced cost.

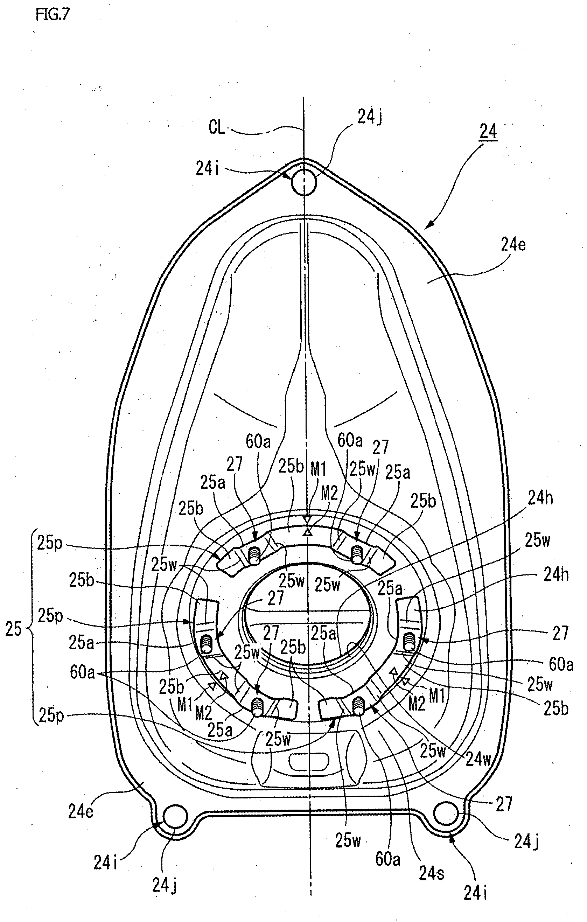

Still further, the support plate sections 25p may be arranged as shown in FIG. 7 as an example modification of the present embodiment. In this case, the two support plate sections 25p close to the vehicle rear are arranged in a horizontally symmetrical manner with respect to the vehicle body centreline CL, and the one support plate section 25p on the front of the vehicle is arranged so that the vehicle body centreline CL passes this support plate section 25p. In this case, the support plate sections 25p are also arranged in a generally horizontally symmetrical manner with respect to the vehicle body centreline CL, thus providing an excellent balance in horizontal vehicle weight.

### (Second Embodiment)

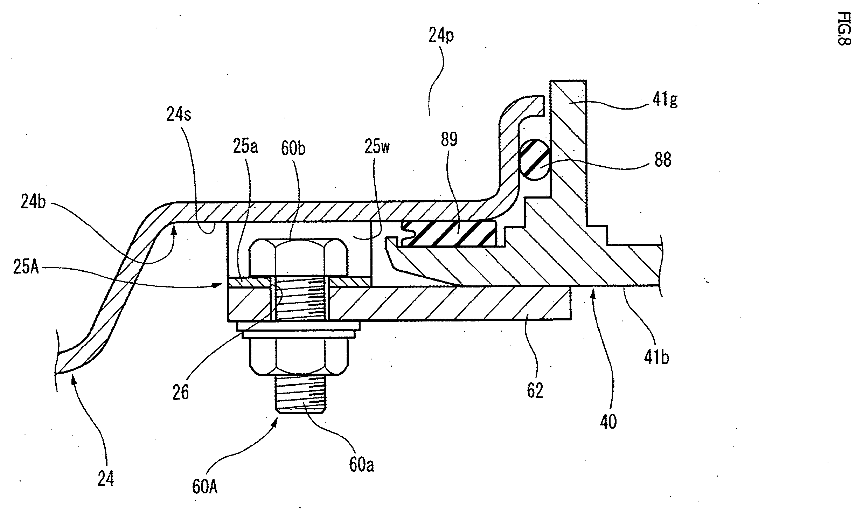

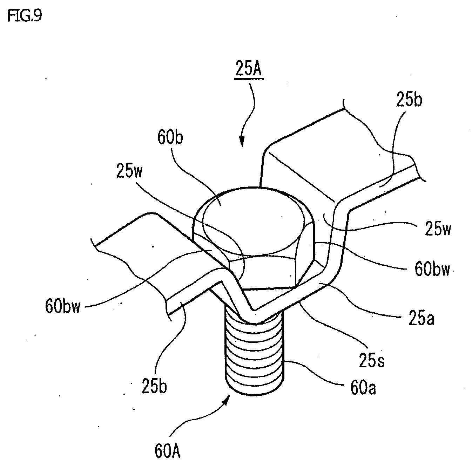

A description will now be given of a second embodiment of the fuel pump attachment structure according to the present embodiment with reference to FIGS. 8 and 9. It should be noted that the same or like components to those in the first embodiment are denoted by the same reference symbols in the drawings, and that the description thereof is omitted or simplified.

In the present (second) embodiment, the securing structure of a bolt 60A may differ from that in the first embodiment as shown in FIGS. 8 and 9. A pump support member 25A in this case has the three support plate sections 25p as in the first embodiment. Each of the support plate sections 25p has the welded portions 25b and the spaced portions 25a. Each of the welded portions 25b is welded to the tank outer wall 24s. Each of the spaced portions 25a is spaced from the tank outer wall 24s by a given distance. The bolt male thread section 60a of the bolt 60A is penetrated through each of the through-holes 26 of the spaced portions 25a.

The bolt head 60b in the present embodiment is hexagonal in shape, unlike the bolt head 60b in the first embodiment. The bolt head 60b is located on the rear side of the spaced portions 25a, and the bolt 60A is not secured by swaging as in the first embodiment. That is, the bolt head 60b is arranged on the rear side of the spaced portion 25a. Side faces 60bw of the bolt head 60b engage with the bent side wall 25w that is bent to form the spaced portion 25a, so as to restrict rotation of the bolt 60A.

As described above, according to the fuel pump attachment structure of the present embodiment, the bent side wall 25w that is bent to form the spaced portion 25a engages with the bolt head 60b to restrict rotation of the bolt 60A. Thus, it is possible to restrict rotation of the bolt 60A simply by providing the bolt 60A in such a manner that the bolt head 60b is arranged on the rear side of the spaced portion 25a.

Other configurations and effects are the same as those in the first embodiment.

The present invention is not limited to the embodiments described above and may be modified as appropriate within the scope of the present invention.

As for the support plate sections 25p of the pump support member 25 in the fuel pump attachment structure, for example, the number of the support plate sections 25p is not limited to three as in the above embodiments. The pump support member 25 may include three or more support plate sections 25p.

Further, the support plate sections 25p in the above embodiments are in the shape of an arc as seen in plan view. However, the shape of the support plate sections 25p is not limited thereto. Instead, the support plate sections 25p may be bent as appropriate in such a manner as to surround the pump attachment opening 24h. Alternatively, the support plate sections 25p may be linear in shape. Still further, the number of the fastening sections 27 provided on each of the support plate sections 25p is not limited to two. Instead, a single fastening section 27 or three or more fastening sections 27 may be provided.

## Claims

1. A fuel pump attachment structure for supporting a fuel pump (40) with a pump support member (25) provided on a tank outer wall (24s) of a fuel tank (24), the fuel pump (40) being inserted into the fuel tank (24) through a pump attachment opening (24h) formed in the fuel tank (24), wherein
the pump support member (25) is formed from a plurality of plate-shaped support plate sections (25p) arranged around the pump attachment opening (24h), and
the fuel pump (40) is secured to fastening sections (27) provided on the support plate sections (25p), and is attached to the pump attachment opening (24h) in a liquid tight manner, **characterized in that**
the pump support member (25) is formed from at least three plate-shaped support plate sections (25p) arranged around the pump attachment opening (24h),
the pump attachment opening (24h) is formed in a bottom face (24b) of the fuel tank (24), which is depressed toward the inside of the fuel tank (24) more than the rest of the bottom of the fuel tank (24).

2. The fuel pump attachment structure of claim 1, wherein
the pump attachment opening (24h) is formed in a circular shape, and
the support plate sections (25p) are formed in the shape of an arc and have approximately the same length as seen in plan view.

3. The fuel pump attachment structure of claim 2, wherein
three support plate sections (25p) are arranged in such a manner as to surround the pump attachment.opening (24h), and
a fastening section (27) is provided at each of the two longitudinal ends of each of the support plate sections (25p).

4. The fuel pump attachment structure of claim 3, wherein
the support plate sections (25p) are arranged in a horizontally symmetrical manner with respect to a vehicle body centreline (CL).

5. The fuel pump attachment structure of any one of claims 1 to 4, wherein each of the support plate sections (25p) includes:
welded portions (25b) each of which is welded to the tank outer wall (24s), and
spaced portions (25a) each of which is spaced by a given distance from the tank outer wall (24s), and
the fastening section (27) includes:
bolt male thread sections (60a) of bolts (60) each of which projects toward the outside of the tank from a through-hole (26) formed in one of the spaced portions (25a), and
support outer faces (25s) of the spaced portions (25a) on the inside of which bolt heads (60b) of the bolts (60) are arranged.

6. The fuel pump attachment structure of claim 5, wherein
each of the support plate sections (25p) has bent side walls (25w) each of which is bent to form the spaced portion (25a), and
each of the bent side walls (25w) engages with the bolt head (60b) to restrict rotation of the bolt (60).

7. The fuel pump attachment structure of any one of claims 1 to 6, wherein
tank side marks (M1) are formed on the tank outer wall (24s) to identify the position where one of the support plate sections (25p) is to be secured during machining of the tank,
a support plate side mark (M2) is formed on each of the support plate sections (25p) to identify the position where one of the support plate sections (25p) is to be secured, and
the position where each of the support plate sections (25p) is to be secured is determined based on the positional relationship between the tank side mark (M1) and the support plate side mark (M2).

8. The fuel pump attachment structure of any one of claims 1 to 7, wherein
the fuel tank (24) and the pump support member (25) are made of a titanium alloy.

## Patentansprüche

1. Eine Kraftstoffpumpen-Befestigungsstruktur zur Aufnahme einer Kraftstoffpumpe (40) mit einem auf einer Außenwand (24s) des Kraftstofftanks (24) bereitgestellten Pumpen-Trägerglied (25), wobei die Kraftstoffpumpe (40) in den Kraftstofftank (24) durch eine in dem Kraftstofftank (24) gebildete Pumpenbefestigungsöffnung (24h) eingeführt wird, wo
- das Pumpen-Trägerglied (25) aus einer Vielzahl an flachen Trägerplattenbereichen (25p) gebildet ist, die um die Pumpenbefestigungsöffnung (24h) herum angeordnet sind; und
- die Kraftstoffpumpe (40) an, auf den Trägerplattenbereichen (25p) bereitgestellten Befestigungsbereichen (27) und an der Pumpenbefestigungsöffnung (24h) auf flüssigkeitsdichte Weise befestigt ist, **dadurch gekennzeichnet, dass**
- das Pumpen-Trägerglied (25) aus mindestens drei flachen Trägerplattenbereichen (25p) gebildet ist, die um die Pumpenbefestigungsöffnung (24h) herum angeordnet sind;
- die Pumpenbefestigungsöffnung (24h) am Boden (24b) des Kraftstofftanks (24) gebildet ist, der ins Innere des Kraftstofftanks (24) mehr eingedrückt ist als der Rest des Bodens des Kraftstofftanks (24).

2. Die Kraftstoffpumpen-Befestigungsstruktur gemäß Anspruch 1, wobei:
- die Pumpenbefestigungsöffnung (24h) kreisrund gebildet ist, und
- die Trägerplattenbereiche (25p) in der Form eines Bogens gebildet sind und ungefähr dieselbe Länge haben, als wie in Draufsicht gesehen.

3. Die Kraftstoffpumpen-Befestigungsstruktur gemäß Anspruch 2, wobei:
- drei flache Trägerplattenbereiche (25p) so angeordnet sind, dass sie die Pumpenbefestigungsöffnung (24h) umgeben, und
- ein Befestigungsbereich (27) an jedem der beiden länglichen Ende eines jeden Trägerplattenbereichs (25p) bereitgestellt wird.

4. Die Kraftstoffpumpen-Befestigungsstruktur gemäß Anspruch 3, wobei die Trägerplattenbereiche (25p) in Bezug auf eine Mittellinie (CL) des Fahrzeugkörpers horizontal symmetrisch angeordnet sind.

5. Die Kraftstoffpumpen-Befestigungsstruktur gemäß einem der Ansprüche 1 bis 4, wo jeder der Trägerplattenbereiche (25p) folgendes umfasst:
- geschweißte Abschnitte (25b), wobei jeder davon an die Außenwand (24s) des Tanks geschweißt ist, und
- Abschnitte auf Abstand (25a), die sich jeder in einem gewissen Abstand zur Außenwand (24s) des Tanks befinden, und
Einen Befestigungsbereich (27), der:
- Bolzenbereiche mit Außengewinde (60a) von Bolzen (60), von denen jeder aus dem Tank nach außen durch ein in einer der Abstandsbereiche (25a) gebildetes Durchgangsloch (26) projiziert, und
- äußere Trägerflächen (25s) der Abstandsbereiche (25a) auf der Innenseite umfasst, auf der die Bolzenköpfe (60b) der Bolzen (60) angeordnet sind.

6. Die Kraftstoffpumpen-Befestigungsstruktur gemäß Anspruch 5, wo
- jeder der Trägerplattenbereiche (25p) gekrümmte Seitenwände (25w) aufweist, die gebogen werden, um den Abstandsbereich (25a) zu bilden; und
- jede der gekrümmten Seitenwände (25w) mit dem Bolzenkopf (60b) greift, um die Rotation des Bolzens (60) zu begrenzen.

7. Die Kraftstoffpumpen-Befestigungsstruktur gemäß einem der Ansprüche 1 bis 6, wobei Tank-Seitenmarken (M1) auf der Tank-Außenwand (24s) zur Identifizierung der Position angebracht sind, wo einer der Trägerplattenbereiche (25p) während der Bearbeitung des Tanks gesichert werden muss,
- wobei eine Trägerplatten-Seitenmarke (M2) auf jedem der Trägerplattenbereiche (25p) zur Identifizierung der Position angebracht wird, wo einer der Trägerplattenbereiche (25p) gesichert werden muss, und
- die Position, wo jeder Trägerplattenbereich (25p) gesichert werden muss, auf Grundlage der Positionsbeziehung zwischen der Tank-Seitenmarke (M1) und der Trägerplatten-Seitenmarke (M2) bestimmt wird.

8. Die Kraftstoffpumpen-Befestigungsstruktur gemäß einem der Ansprüche 1 bis 7, wobei der Kraftstofftank (24) und das Pumpenträgerglied (25) aus einer Titanlegierung sind.

## Revendications

1. Structure de fixation de pompe à carburant pour supporter une pompe à carburant (40) avec un élément de support de pompe (25) prévu sur une paroi extérieure de réservoir (24s) d'un réservoir de carburant (24), la pompe à carburant (40) étant insérée dans le réservoir de carburant (24) à travers une ouverture de fixation de pompe (24h) formée dans le réservoir de carburant (24), dans laquelle
l'élément de support de pompe (25) est formé à partir d'une pluralité de sections de plaque de support de forme plate (25p) agencées autour de l'ouverture de fixation de pompe (24h), et
la pompe à carburant (40) est fixée de manière sûre à des sections d'attache (27) prévues sur les sections de plaque de support (25p), et est fixée à l'ouverture de fixation de pompe (24h) d'une façon étanche au fluide, **caractérisée en ce que**
l'élément de support de pompe (25) est formé à partir d'au moins trois sections de plaque de support de forme plate (25p) agencées autour de l'ouverture de fixation de pompe (24h),
l'ouverture de fixation de pompe (24h) est formée dans une face de fond (24b) du réservoir de carburant (24), qui est enfoncée vers l'intérieur du réservoir de carburant (24) plus que le reste du fond du réservoir de carburant (24).

2. Structure de fixation de pompe à carburant selon la revendication 1, dans laquelle
l'ouverture de fixation de pompe (24h) est formée en une forme circulaire, et
les sections de plaque de support (25p) sont formées en forme d'un arc et ont approximativement la même longueur que lorsque l'on regarde dans une vue en plan.

3. Structure de fixation de pompe à carburant selon la revendication 2, dans laquelle
trois sections de plaque de support (25p) sont agencées de façon à entourer l'ouverture de fixation de pompe (24h), et
une section d'attache (27) est prévue au niveau de chacune des deux extrémités longitudinales de chacune des sections de plaque de support (25p).

4. Structure de fixation de pompe à carburant selon la revendication 3, dans laquelle
les sections de plaque de support (25p) sont agencées d'une façon horizontalement symétrique par rapport à une ligne centrale de carrosserie de véhicule (CL).

5. Structure de fixation de pompe à carburant selon l'une quelconque des revendications 1 à 4, dans laquelle chacune des sections de plaque de support (25p) inclut :
des parties soudées (25b), chacune d'elles étant soudée à la paroi extérieure de réservoir (24s), et
des parties espacées (25a), chacune d'elles étant espacée par une distance donnée de la paroi extérieure de réservoir (24s), et
la section d'attache (27) inclut :
des sections de boulon à filetage mâle (60a) de boulons (60), chacune d'elles dépassant vers l'extérieur du réservoir à partir d'un trou traversant (26) formé dans une des parties espacées (25a), et
des faces extérieures de support (25s) des parties espacées (25a) sur l'intérieur desquelles des têtes de boulon (60b) des boulons (60) sont agencées.

6. Structure de fixation de pompe à carburant selon la revendication 5, dans laquelle
chacune des sections de plaque de support (25p) a des parois latérales pliées (25w), chacune d'elles étant pliée pour former la partie espacée (25a), et
chacune des parois latérales pliées (25w) met en prise la tête de boulon (60b) pour limiter la rotation du boulon (60).

7. Structure de fixation de pompe à carburant selon l'une quelconque des revendications 1 à 6, dans laquelle
des marques latérales de réservoir (M1) sont formées sur la paroi extérieure de réservoir (24s) pour identifier la position où une des sections de plaque de support (25p) doit être fixée de manière sûre pendant l'usinage du réservoir,
une marque latérale de plaque de support (M2) est formée sur chacune des sections de plaque de support (25p) pour identifier la position où une des sections de plaque de support (25p) doit être fixée de manière sûre, et
la position où chacune des sections de plaque de support (25p) doit être fixée de manière sûre est déterminée en se basant sur la relation positionnelle entre la marque latérale de réservoir (M1) et la marque latérale de plaque de support (M2).

8. Structure de fixation de pompe à carburant selon l'une quelconque des revendications 1 à 7, dans laquelle
le réservoir de carburant (24) et l'élément de support de pompe (25) sont faits d'un alliage de titane.
